(19)

**Europäisches Patentamt**
**European Patent Office**
**Office européen des brevets**

(11)  **EP 1 613 483 B1**

(12)  **EUROPEAN PATENT SPECIFICATION**

(45) Date of publication and mention
of the grant of the patent:
**16.11.2011  Bulletin 2011/46**

(51) Int Cl.:
**B41M 5/00** (2006.01)      **C09D 129/04** (2006.01)
**C09D 189/04** (2006.01)

(21) Application number: **04725625.0**

(86) International application number:
**PCT/EP2004/003569**

(22) Date of filing: **03.04.2004**

(87) International publication number:
**WO 2004/091925 (28.10.2004 Gazette 2004/44)**

(54) **METHOD FOR IMPROVING THE OZONE STABILITY OF INK DYES PRINTED ON AN INKJET RECORDING ELEMENT**

VERFAHREN ZUR VERBESSERUNG DER OZONSTABILITÄT DER TINTENFARBSTOFFE AUF EIN TINTENSTRAHLAUFZEICHNUNGSELEMENTS GEDRUKT

PROCEDE POUR L'AMELIORATION DE LA STABILITE D'OZONE DES COLORANTS D'ENCRE IMPRIMÉS SUR UN ELEMENT D'ENREGISTREMENT A JET D'ENCRE

(84) Designated Contracting States:
**DE FR GB**

(30) Priority: **17.04.2003  FR 0304848**

(43) Date of publication of application:
**11.01.2006  Bulletin 2006/02**

(73) Proprietor: **Eastman Kodak Company**
**Rochester, NY 14650-2201 (US)**

(72) Inventor: **THOMAS, Françoise M.,**
**Kodak Ind. Dépt. Brevets**
**F-71102 Chalon sur Saone Cedex (FR)**

(74) Representative: **Weber, Etienne Nicolas**
**Kodak Industrie**
**Département Brevets - CRT**
**Zone Industrielle**
**71102 Chalon sur Saône Cedex (FR)**

(56) References cited:
**WO-A-94/02325      FR-A- 2 259 166**
**US-A- 5 674 654**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The present invention relates to a method for improving the ozone stability of the ink dyes printed on an inkjet recording element.

Digital photography has been growing fast for several years and the general public now has access to efficient and reasonably priced digital cameras. Therefore people are seeking to be able to produce photographic prints from a simple computer and its printer, with the best possible quality.

Many printers, especially those linked to personal office automation, use the inkjet printing technique. There are two major families of inkjet printing techniques: continuous jet and drop-on-demand.

Continuous jet is the simpler system. Pressurized ink ($3.10^5$ Pa) is forced to go through one or more nozzles so that the ink is transformed into a flow of droplets. In order to obtain the most regular possible sizes and spaces between drops, regular pressure pulses are sent using for example a piezoelectric crystal in contact with the ink with high frequency (up to 1 MHz) alternating current (AC) power supply. So that a message can be printed using a single nozzle, every drop must be individually controlled and directed. Electrostatic energy is used for this: an electrode is placed around the ink jet at the place where drops form. The jet is charged by induction and every drop henceforth carries a charge whose value depends on the applied voltage. The drops then pass between two deflecting plates charged with the opposite sign and then follow a given direction, the amplitude of the movement being proportional to the charge carried by each of the plates. To prevent other drops from reaching the paper, they are left uncharged: so, instead of going to the support they continue their path without being deflected and go directly into a container. The ink is then filtered and can be reused.

The other category of inkjet printer is drop-on-demand (DOD). This constitutes the base of inkjet printers used in office automation. With this method, the pressure in the ink cartridge is not maintained constant but is applied when a character has to be formed. In one widespread system there is a row of 12 open nozzles, each of them being activated with a piezoelectric crystal. The ink contained in the head is given a pulse: the piezo element contracts with an electric voltage, which causes a decrease of volume, leading to the expulsion of the drop by the nozzle. When the element resumes its initial shape, it pumps in the reservoir the ink necessary for new printings. The row of nozzles is thus used to generate a column matrix, so that no deflection of the drop is necessary. One variation of this system consists in replacing the piezoelectric crystals by small heating elements behind each nozzle. The drops are ejected following the forming of bubbles of solvent vapor. The volume increase enables the expulsion of the drop. Finally, there is a pulsed inkjet system in which the ink is solid at ambient temperature. The print head thus has to be heated so that the ink liquefies and can print. This enables rapid drying on a wider range of products than conventional systems.

There now exist new "inkjet" printers capable of producing photographic images of excellent quality. However, they cannot supply good proofs if inferior quality printing paper is used. The choice of printing paper is fundamental for the quality of obtained image. The printing paper must combine the following properties: a printed image of high quality, rapid drying after printing, a smooth glossy appearance, and good resistance of the image colors in time, which means especially good stability to ozone present in the atmosphere of the ink dyes.

In general, the printing paper comprises a support coated with one or more layers according to the properties required. Two main technologies have been developed. On the one hand, there is a non-porous printing paper, usually comprising layers of polymers, such as gelatin. This paper enables images that are glossy and ozone stable to be obtained because, once the polymer layer is dry, permeability to ozone is low. However, these papers, not being porous, have to swell to absorb the ink. This swelling slows ink absorption so that the ink can easily run just after printing.

Another paper has been developed to obtain a paper with rapid drying in order to increase printing output rates. This is a paper comprising a porous ink-receiving layer including colloidal particles used as receiving agent and a polymer binder. This porous paper absorbs the ink rapidly thanks to the pores existing between the particles.

The purpose of the receiving agent is to fix the dyes in the printing paper. The best-known inorganic receivers are colloidal silica or boehmite. For example, the European Patent Applications EP-A-976,571 and EP-A-1,162,076. describe materials for inkjet printing in which the ink-receiving layer contains as inorganic receivers Ludox™ CL (colloidal silica) marketed by Grace Corporation or Dispal™ (colloidal boehmite) marketed by Sasol. However, printing paper comprising a porous ink-receiving layer can have poor ozone stability in time, which is demonstrated by a loss of color density. In particular this is due to the fact that the colloidal particles are easily accessible to ozone and the surface of these particles could catalyze the ozone degradation of the ink dyes.

WO-A-94/02325 describes an image receiving element for non-impact printing that provides good image performance, passes readily through the recording device and produces a water resistant image. It discloses an element comprising a dimensionally stable support, an image receiving layer comprising a binder consisting essentially of gelatin (10-25% by wt) and a water soluble film forming acrylic polymer (75-90%) and further comprising a whitening agent and which element has a surface resistivity of about $10^{10}$-$10^{13}$ ohms. The element may further comprise an antistat agent, such as sulfonated styrene-maleic acid copolymers, to ensure the surface resistivity is in the desired range.

To meet new market needs in terms of printing speed and color stability to ozone, it is necessary to propose a method enabling improvement of the ozone stability of a material intended for inkjet printing.

## SUMMARY OF THE INVENTION

The present invention relates to the use of at least one sulfonic polystyrene or one of its sulfonate salts in an inkjet recording element, said element comprising a support and at least one ink-receiving layer including at least one hydrosoluble binder and inorganic fillers, for improving the ozone stability of the ink dyes printed on said element.

In preference, one uses sulfonic polystyrene in salt form chosen from among the group consisting of sodium polystyrene sulfonate, lithium polystyrene sulfonate, ammonium polystyrene sulfonate, and potassium polystyrene sulfonate.

The use of sulfonic polystyrene or polystyrene sulfonate enables the ozone stability of a porous inkjet recording element to be improved for inkjet printing while obtaining an element having at least the same ink instant-dryness.

## BRIEF DESCRIPTION OF THE DRAWINGS

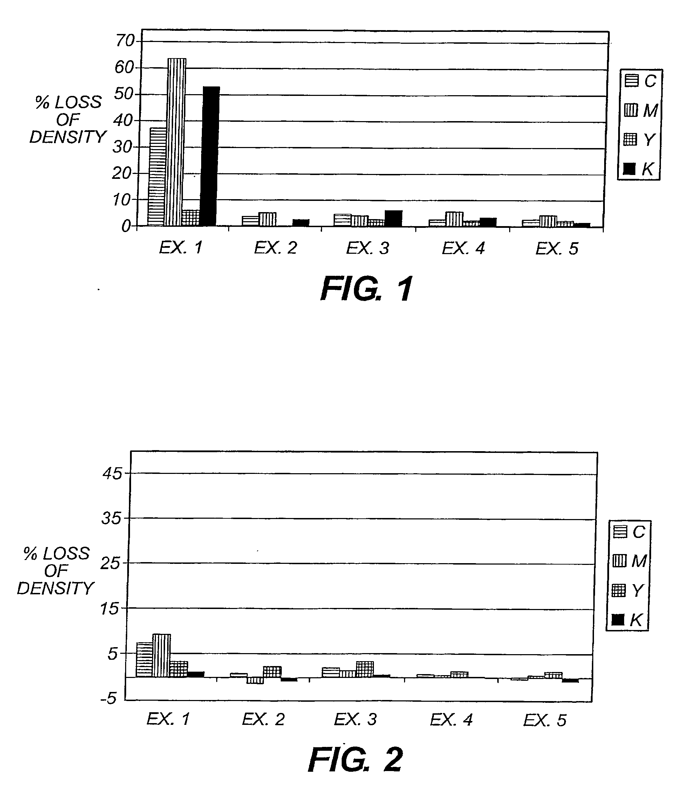

Figures 1, 2, 4 to 8, and 10 to 14 represent the percentage of color density loss for various elements exposed to ozone, and

Document FR - A- 2 259 166 discloses a method of preparing fibres of a fibre-forming polyamide (e.g. Nylon). The purpose in this document is to increase the affinity of the polyamide fibres to cationic dyes and to provide a cationic dyed polyamide which has increased resistance to ozone fading, particularly when an anthraquinone dyestuff is employed. The addition of sulfonated polystyrene the polyamide forming monomers or the polyamide itself before it is spun into fibres is found to increase the affinity of the resultant fibres to cationic dyes. Such cationic dyed fibres have improved resistance to fading on exposure to ozone. The sulfonated polystyrene must be sulfonated to 90% of its theoretical maximum and be present in the form of a water-soluble salt in which the salt-forming cation is wholly lithium, magnesium or calcium.

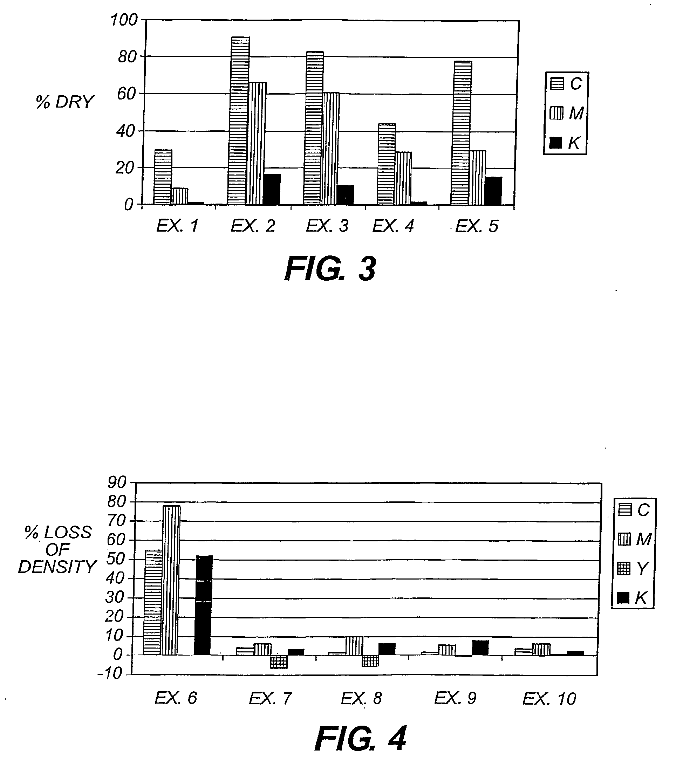

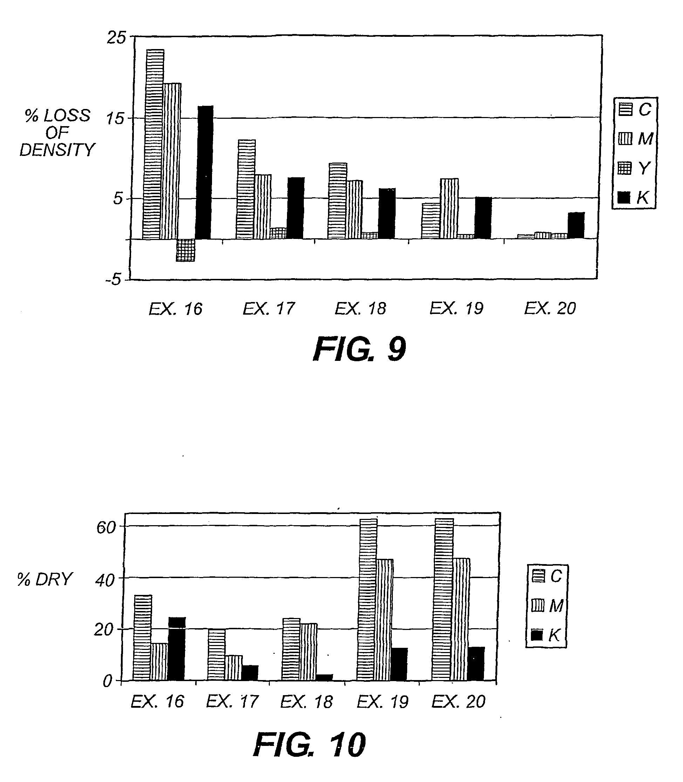

Figures 3 and 9 represent the percentage of instant dryness for various elements.

## DETAILED DESCRIPTION OF THE INVENTION

An inkjet recording element comprises firstly a support. This support is selected according to the desired use. It can be a transparent or opaque thermoplastic film, in particular a polyester base film such as polyethylene terephthalate; cellulose derivatives, such as cellulose ester, cellulose triacetate, cellulose diacetate; polyacrylates; polyimides; polyamides; polycarbonates; polystyrenes; polyolefines; polysulfones; polyetherimides; vinyl polymers such as polyvinyl chloride; and their mixtures. The support used in the invention can also be paper, both sides of which may be covered with a polyethylene layer. When the support comprising the paper pulp is coated on both sides with polyethylene, it is called Resin Coated Paper (RC Paper) and is marketed under various brand names. This type of support is especially preferred to constitute an inkjet recording element. The side of the support that is used can be coated with a very thin layer of gelatin or another composition to ensure the adhesion of the first layer on the support. To improve the adhesion of the ink-receiving layer on the support, the support surface can also have been subjected to a preliminary treatment by Corona discharge before applying the ink-receiving layer.

An inkjet recording element then comprises at least one ink-receiving layer including at least one hydrosoluble binder. Said hydrosoluble binder can be a hydrophilic polymer such as polyvinyl alcohol, poly(vinyl pyrrolidone), gelatin, cellulose ethers, poly(oxazolines), poly(vinylacetamides), poly(vinyl acetate/vinyl alcohol) partially hydrolyzed, poly(acrylic acid), poly(acrylamide), sulfonated or phosphated polyesters and polystyrenes, casein, zein, albumin, chitin, dextran, pectin, derivatives of collagen, agar-agar, guar, carragheenane, tragacanth, xanthan and others. In preference, one uses gelatin or polyvinyl alcohol. The gelatin is that conventionally used in the photographic field. Such a gelatin is described in Research Disclosure, September 1994, No. 36544, part IIA. *Research Disclosure* is a publication of Kenneth Mason Publications Ltd., Dudley House, 12 North Street, Emsworth, Hampshire PO10 7DQ, United Kingdom. The gelatin can be obtained from SKW and the polyvinyl alcohol from Nippon Gohsei, or Air Product with the name Airvol® 130.

The ink-receiving layer also comprises, as receiving agent, inorganic fillers. In one embodiment, said inorganic fillers are based on metal oxide or metal hydroxide. In preference, the inorganic fillers are based on alumina, silica, titanium, zirconium, or their mixtures. Preferably, the inorganic fillers are chosen from among the group consisting of the boehmites, fumed aluminas, colloidal silicas, fumed silicas, calcium silicates, magnesium silicates, zeolites, kaolin, bentonite, silicon dioxide, and titanium dioxide. According to another embodiment, the inorganic fillers are based on calcium carbonates, or barium carbonates.

The quantities of the inorganic fillers and hydrosoluble binder are those generally used for porous inkjet recording elements.

Those skilled in the art know that such inorganic fillers, used alone as a receiving agent in ink-receiving layers, do not enable the required ozone stability of the image to be obtained for inkjet recording elements.

According to the present invention, the use of at least one sulfonic polystyrene or polystyrene sulfonate salt enables the ozone stability of the dyes making up the image to be improved.

Such sulfonic polystyrenes or polystyrene sulfonates are polymers marketed for example by Alco Chemical™ under the VERSA-TL® brand, and can have a molecular weight between 15,000 and 1,000,000.

When polystyrene sulfonate is used, it can be chosen from among the group consisting of sodium, lithium, ammonium and potassium polystyrene sulfonate.

The quantity of sulfonic polystyrene or polystyrene sulfonate (in dry state) is between 0.1 % and 10% by weight with reference to the total weight of the wet receiving layer. Preferably, the quantity of sulfonic polystyrene or polystyrene sulfonate (in dry state) is between 0.25% and 8% by weight with reference to the total weight of the wet receiving layer. Still more preferably, the quantity of sulfonic polystyrene or polystyrene sulfonate (in dry state) is between 1% and 3% by weight with reference to the total weight of the wet receiving layer.

The sulfonic polystyrene or polystyrene sulfonate is added to the layer composition intended to be coated on the support to constitute the ink-receiving layer of the element described above. To produce this composition, in preference, the sulfonic polystyrene or polystyrene sulfonate in the form of an aqueous solution and the inorganic fillers are first mixed together and then the hydrosoluble binder is added. The composition then has the form of an aqueous solution or a dispersion containing all the necessary components.

The composition can be layered on the support according to any appropriate coating method, such as blade, knife or curtain coating. The composition is applied with a thickness between approximately 100 um and 200 $\mu$m in the wet state. The ink-receiving layer has a thickness usually between 5 $\mu$m and 50 $\mu$m in the dry state. The composition forming the ink-receiving layer can be applied on both sides of the support. It is also possible to provide an antistatic or anti-winding layer on the back of the support coated with the ink-receiving layer.

The inkjet recording element can comprise, besides the ink-receiving layer described above, other layers having another function, arranged above or below said ink-receiving layer. The ink-receiving layer as well as the other layers can comprise all the other additives known to those skilled in the art to improve the properties of the resulting image, such as surface-actives, UV ray absorbers, optical brightening agents, antioxidants, plasticizers, etc.

The use of sulfonic polystyrene or polystyrene sulfonate in an inkjet recording element comprising an ink-receiving layer including inorganic fillers enables the ozone stability of the ink dyes to be improved, without degrading the element drying properties. This invention can be used for any type of inkjet printer as well as for all the inks developed for this technology.

The following examples illustrate the present invention.

**1) Preparing compositions intended to be layered on a support to constitute an ink-receiving layer**

As hydrosoluble binder, polyvinyl alcohol was used (Gohsenol™ GH23 marketed by Nippon Gohsei) diluted to 9% in osmosis water.

The polystyrene was used in the form of two sulfonate salts as given in Table I below and marketed by Alco Chemical™:

**Table I**

| Polystyrene sulfonate | Salt | Form | Molecular weight |
|---|---|---|---|
| Versa TL® 502 | Sodium salt | solid | 1,000,000 |
| Versa TL® 73 | Lithium salt | Solution at 30% in water | 70,000 |

The inorganic fillers used are given below in Table II:

**Table II**

| Inorganic filler | Brand | Charge | Supplier |
|---|---|---|---|
| Fumed alumina (dispersion at 40%) | CAB-O-SPERSE® PG003 | Positive | Cabot Corporation |
| Colloidal silica (dispersion at 40%) | Ondeo Nalco®2329 | Negative | Ondeo Nalco Corporation |

(continued)

| Inorganic filler | Brand | Charge | Supplier |
|---|---|---|---|
| Colloidal silica (dispersion at 30%) | Ludox™ PGE | Negative | Grace Corporation |

All the compositions resulted from mixing:

0 g to 5 g dry polystyrene sulfonate (see Table III below)
13.5 g dry inorganic fillers
18.1 g polyvinyl alcohol in aqueous solution at 9%
Water to 100 g

First the mixture of polystyrene sulfonate in aqueous solution and the inorganic fillers was made in a glass bottle comprising glass beads with diameter 10 mm. The mixture was stirred for three hours on a roller stirrer. Then the polyvinyl alcohol was added and stirred for 18 hours on a roller stirrer. Before being layered, the resulting mixture was put into a tank thermostatically controlled to 50°C to lower the viscosity of said mixture.

## 2) Preparing inkjet recording elements

To do this, a Resin Coated Paper type support was placed on a coating machine, first coated with a very thin gelatin layer, and held on the coating machine by vacuum. This support was coated with a composition as prepared according to paragraph 1 using a filmograph to obtain a wet thickness of 200 $\mu$m. Then, it was left to dry overnight at ambient air temperature (21°C).

The resulting materials correspond to the examples shown in Table III below giving the polystyrene sulfonate and the quantity used in the ink-receiving layer, as well as the inorganic filler used:

**Table III**

| Material | Inorganic filler added to the ink-receiving layer | Polystyrene sulfonate (PSS) | % by weight of dry PSS in the mixture |
|---|---|---|---|
| Ex 1 (comp.) | Colloidal silica Ludox™ PGE | Versa TL® 502 | 0 |
| Ex 2 (inv.) | Colloidal silica Ludox™ PGE | Versa TL® 502 | 0.25 |
| Ex 3 (inv.) | Colloidal silica Ludox™ PGE | Versa TL® 502 | 1.25 |
| Ex 4 (inv.) | Colloidal silica Ludox™ PGE | Versa TL® 502 | 2.5 |
| Ex 5 (inv.) | Colloidal silica Ludox™ PGE | Versa TL® 502 | 5 |
| Ex 6 (comp.) | Colloidal silica Ludox™ PGE | Versa TL® 73 | 0 |
| Ex 7 (inv.) | Colloidal silica Ludox™ PGE | Versa TL® 73 | 0.25 |
| Ex 8 (inv.) | Colloidal silica Ludox™ PGE | Versa TL® 73 | 1.25 |
| Ex 9 (inv.) | Colloidal silica Ludox™ PGE | Versa TL® 73 | 2.5 |
| Ex 10 (inv.) | Colloidal silica Ludox™ PGE | Versa TL® 73 | 5 |
| Ex 11 (comp.) | Colloidal silica Nalco®2329 | Versa TL® 502 | 0 |
| Ex 12 (inv.) | Colloidal silica Nalco®2329 | Versa TL® 502 | 0.25 |
| Ex 13 (inv.) | Colloidal silica Nalco®2329 | Versa TL® 502 | 0.5 |
| Ex 14 (inv.) | Colloidal silica Nalco®2329 | Versa TL® 502 | 1 |
| Ex 15 (inv.) | Colloidal silica Nalco®2329 | Versa TL® 502 | 3 |
| Ex 16 (comp.) | Colloidal silica Nalco®2329 | Versa TL® 73 | 0 |
| Ex 17 (inv.) | Colloidal silica Nalco®2329 | Versa TL® 73 | 0.25 |
| Ex 18 (inv.) | Colloidal silica Nalco®2329 | Versa TL® 73 | 0.5 |

(continued)

| Material | Inorganic filler added to the ink-receiving layer | Polystyrene sulfonate (PSS) | % by weight of dry PSS in the mixture |
|---|---|---|---|
| Ex 19 (inv.) | Colloidal silica Nalco®2329 | Versa TL® 73 | 1 |
| Ex 20 (inv.) | Colloidal silica Nalco®2329 | Versa TL® 73 | 3 |
| Ex 21 (comp.) | Fumed alumina CAB-O-SPERSE® PG003 | Versa TL®R 502 | 0 |
| Ex 22 (inv.) | Fumed alumina CAB-O-SPERSE® PG003 | Versa TL® 502 | 0.25 |
| Ex 23 (inv.) | Fumed alumina CAB-O-SPERSE® PG003 | Versa TL® 502 | 0.5 |
| Ex 24 (inv.) | Fumed alumina CAB-O-SPERSE® PG003 | Versa TL® 502 | 1 |
| Ex 25 (comp.) | Fumed alumina CAB-O-SPERSE® PG003 | Versa TL® 73 | 0 |
| Ex 26 (inv.) | Fumed alumina CAB-O-SPERSE® PG003 | Versa TL® 73 | 0.25 |
| Ex 27 (inv.) | Fumed alumina CAB-O-SPERSE® PG003 | Versa TL® 73 | 0.5 |
| Ex 28 (inv.) | Fumed alumina CAB-O-SPERSE® PG003 | Versa TL® 73 | 1 |
| Ex 29 (inv.) | Fumed alumina CAB-O-SPERSE® PG003 | Versa TL® 73 | 3 |

### 3) Evaluating the ozone stability of the image over time

To evaluate ozone stability over time, a color alteration test by exposure to ozone was performed for each resulting inkjet recording element. For this, targets composed of four colors, cyan, magenta, yellow and black were printed on each element using a KODAK® PPM 200 printer and related ink and/or an Epson® 670 or Epson® 890 printer and related inks, to test equally the various dyes in the inks. The targets were analyzed using a Gretag Macbeth Spectrolino densitometer that measured the intensity of the various colors. Then the elements were placed to the dark in a room with controlled ozone atmosphere (60 ppb) for several weeks. Each week, any degradation of the color density was monitored using the densitometer.

### 4) Evaluating the instant dryness

Also measured for certain resulting elements was the instant dryness of the ink once printed on said elements.
For this, a target made of 10-cm long strips of four colors, cyan, magenta, yellow and black, was printed on certain of the resulting elements. Just at the end of printing, a sheet of plain paper was put onto the freshly printed target and pressure was applied using a smooth heavy roller. The sheet of plain paper was then removed and the intensity of the transferred image of the target was measured on said sheet. The more intense the transferred image was, the slower the instant dryness of the ink was.
The instant dry percentage is defined by the following equation:

$$\%Dry = \left(1 - \frac{1 - 10^{-D_{mes}}}{1 - 10^{-D_{ref.}}}\right) \times 100$$

where $D_{mes}$ is the optical density measured on the image of the transferred target less $D_{min}$ (density of the resulting element not printed)
$D_{ref}$ is the optical density measured on a target printed on the sheet of plain paper less $D_{min}$.

The optical densities were measured using the Gretag Macbeth Spectrolino densitometer.

The change in the instant dry percentage is linked to the instant dryness of the ink. The higher the percentage *%Dry* is, the better the instant dryness of the ink is.

## 5) Results

Figure 1 represents the percentage of density loss observed for the maximum density for the four colors of the target after three weeks for examples 1 to 5 printed using the Kodak® PPM200 printer. Letters C, M, Y and K represent the colors cyan, magenta, yellow and black respectively.

Figure 2 represents the percentage of density loss observed for the maximum density for the four colors of the target after three weeks for examples 1 to 5 printed using the Epson® 890 printer.

Figure 3 represents the instant dry percentage *%Dry* for the colors, cyan, magenta and black, for the examples 1 to 5 printed using the Epson® 890 printer.

Figure 4 represents the percentage of density loss observed for the maximum density for the four colors of the target after four weeks for examples 6 to 10 printed using the Kodak® PPM200 printer.

Figure 5 represents the percentage of density loss observed for the maximum density for the four colors of the target after four weeks for examples 6 to 10 printed using the Epson® 670 printer.

These Figures 1 to 5 show that the use of polystyrene sulfonate (Versa TL® 502 or Versa TL® 73), in an inkjet recording element comprising an ink-receiving layer including colloidal silica Ludox™ PGE as inorganic receiving agent, enabled the ozone stability of the dyes to be increased considerably, even when very little polystyrene sulfonate was used.

Further, Figure 3 shows that the instant dry percentage is also considerably increased. The use of polystyrene sulfonate did not degrade the instant dryness of the ink but, quite the opposite, enabled it to be improved compared with the element not containing polystyrene sulfonate.

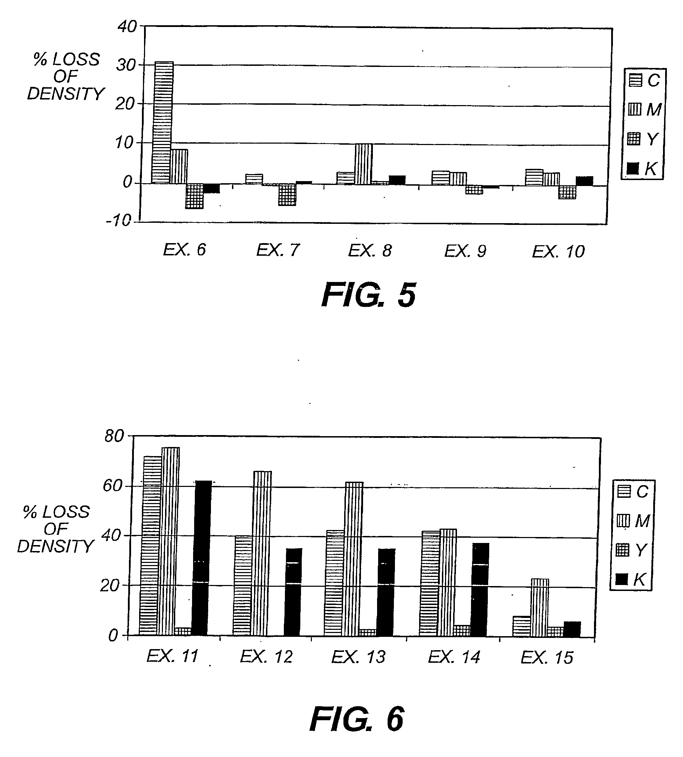

Figure 6 represents the percentage of density loss observed for the maximum density for the four colors of the target after five weeks for examples 11 to 15 printed using the Kodak® PPM200 printer.

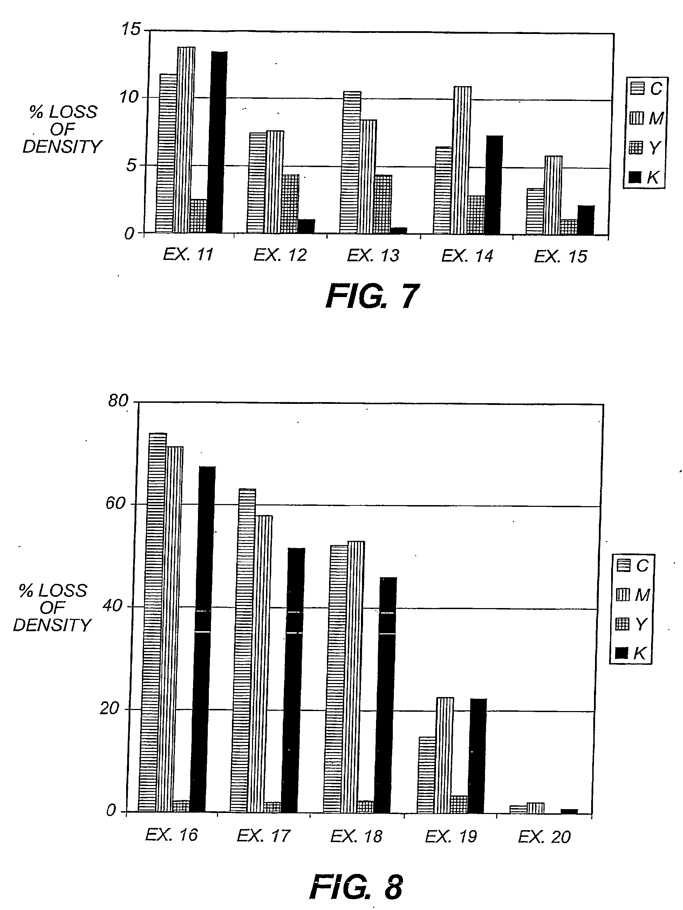

Figure 7 represents the percentage of density loss observed for the maximum density for the four colors of the target after five weeks for examples 11 to 15 printed using the Epson® 670 printer.

Figure 8 represents the percentage of density loss observed for the maximum density for the four colors of the target after three weeks for examples 16 to 20 printed using the Kodak® PPM200 printer.

Figure 9 represents the percentage of density loss observed for the maximum density for the four colors of the target after three weeks for examples 16 to 20 printed using the Epson® 890 printer.

Figure 10 represents the instant dry percentage *%Dry* for the colors, cyan, magenta and black, for the examples 16 to 20 printed using the Epson® 890 printer.

These Figures 1 to 6 show that the use of polystyrene sulfonate (Versa TL® 502 or Versa TL® 73), in an inkjet recording element comprising an ink-receiving layer including colloidal silica Nalco® 2329 as inorganic receiving agent, enabled the ozone stability of the dyes to be increased considerably, in particular when 1 % to 3% polystyrene sulfonate was used.

Further, Figure 10 shows that the instant dry percentage of instantly dry ink was also considerably increased when 1% to 3% polystyrene sulfonate was used. The use of polystyrene sulfonate did not degrade the instant dryness of the ink but, quite the opposite, enabled it to be improved compared with the element not containing polystyrene sulfonate.

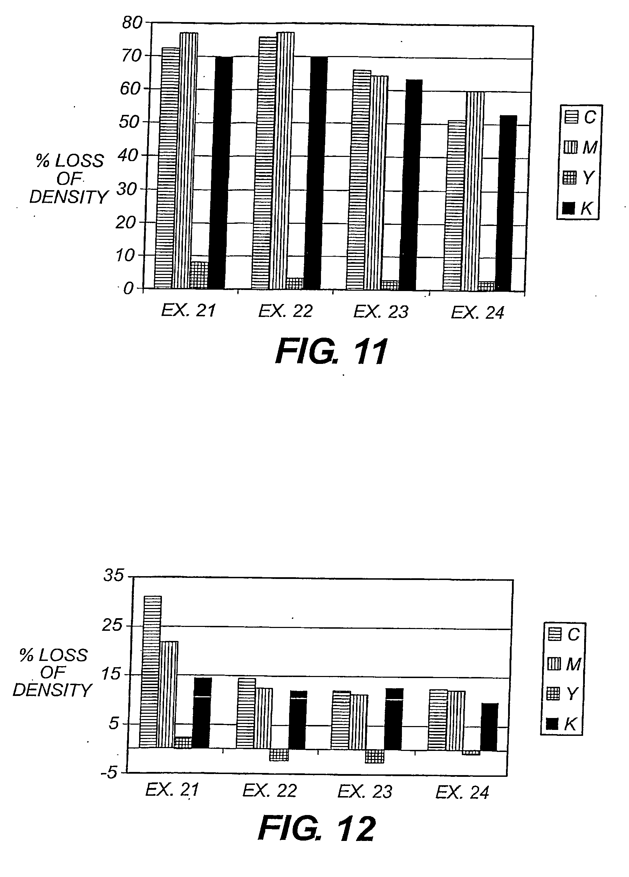

Figure 11 represents the percentage of density loss observed for the maximum density for the four colors of the target after three weeks for examples 21 to 24 printed using the Kodak® PPM200 printer.

Figure 12 represents the percentage of density loss observed for the maximum density for the four colors of the target after three weeks for examples 21 to 24 printed using the Epson® 890 printer.

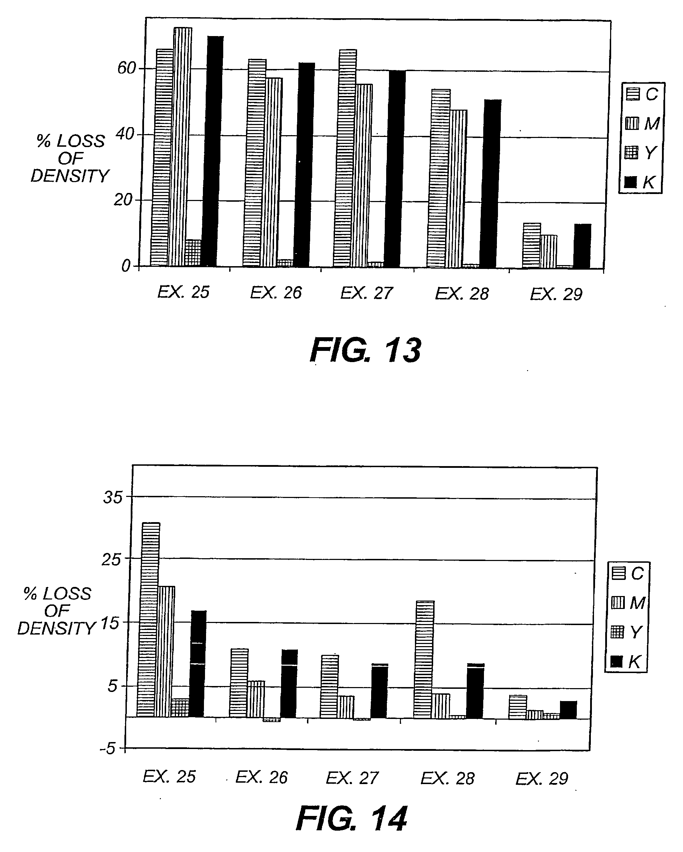

Figure 13 represents the percentage of density loss observed for the maximum density for the four colors of the target after three weeks for examples 25 to 29 printed using the Kodak® PPM200 printer.

Figure 14 represents the percentage of density loss observed for the maximum density for the four colors of the target after three weeks for examples 25 to 29 printed using the Epson® 890 printer.

These Figures 11 to 14 show that the use of polystyrene sulfonate (Versa TL® 502 or Versa TL® 73), in an inkjet recording element comprising an ink-receiving layer including fumed alumina as inorganic receiving agent, enabled the ozone stability of the dyes to be increased, in particular when 1% to 3% polystyrene sulfonate was used.

**Claims**

1. Use of at least one sulfonic polystyrene or one of its sulfonate salts in an inkjet recording element, said element comprising a support and at least one ink-receiving layer including at least one hydrosoluble binder and inorganic fillers, for improving the ozone stability of the ink dyes printed on said element.

2. The use according to Claim 1, wherein the polystyrene sulfonate is chosen from among the group consisting of sodium polystyrene sulfonate and lithium polystyrene sulfonate.

3. The use according to Claim 1, wherein the amount of sulfonic polystyrene or polystyrene sulfonate in the dry state is between 0.1 % and 10% by weight compared with the total weight of the wet receiving layer.

4. The use according to Claim 3, wherein the amount of sulfonic polystyrene or polystyrene sulfonate in the dry state is between 1 % and 3% by weight compared with the total weight of the wet receiving layer.

5. The use according to Claim 1, wherein the inorganic fillers are based on metal oxide or metal hydroxide.

6. The use according to Claim 5, wherein the inorganic fillers are based on alumina, silica, titanium, zirconium, or their mixtures.

7. The use according to Claim 6, wherein the inorganic fillers are chosen from among the group consisting of the boehmites, fumed aluminas, colloidal silicas, fumed silicas, calcium silicates, magnesium silicates, zeolites, kaolin, bentonite, silicon dioxide, and titanium dioxide.

8. The use according to Claim 1, wherein the inorganic fillers are based on calcium carbonates or barium carbonates.

9. The use according to Claim 1, wherein the hydrosoluble binder is hydrophilic gelatin or polyvinyl alcohol.

10. A use as claimed in any one of the preceding claims, wherein the hydrosoluble binder is polyvinyl alcohol.

11. The use as claimed in any one of the preceding claims, wherein the inkjet recording element is a porous inkjet recording element.

**Patentansprüche**

1. Verwendung mindestens eines Sulfonpolystyrols oder eines seiner Sulfonatsalze in einem Tintenstrahlaufzeichnungselement, wobei das Element einen Träger umfasst und mindestens eine Tintenempfangsschicht, die mindestens ein hydrolösliches Bindemittel und anorganische Füllstoffe enthält zur Verbesserung der Ozonstabilität der auf das Element gedruckten Tintenfarbstoffe.

2. Verwendung nach Anspruch 1, worin das Polystyrolsulfonat ausgewählt ist aus der Gruppe bestehend aus Natriumpolystyrolsulfonat und Lithiumpolystyrolsulfonat.

3. Verwendung nach Anspruch 1, worin die Menge an Sulfonpolystyrol oder Polystyrolsulfonat in trockenem Zustand zwischen 0,1 und 10 Gewichtsprozent liegt, verglichen mit dem Gesamtgewicht der nassen Empfangsschicht.

4. Verwendung nach Anspruch 3, worin die Menge an Sulfonpolystyrol oder Polystyrolsulfonat in trockenem Zustand zwischen 1 und 3 Gewichtsprozent liegt, verglichen mit dem Gesamtgewicht der nassen Empfangsschicht.

5. Verwendung nach Anspruch 1, worin die anorganischen Füllstoffe auf Metalloxid oder Metallhydroxid basieren.

6. Verwendung nach Anspruch 5, worin die anorganischen Füllstoffe auf Aluminiumoxid, Siliciumdioxid, Titan, Zirkon oder Mischungen daraus basieren.

**7.** Verwendung nach Anspruch 6, worin die anorganischen Füllstoffe ausgewählt sind aus der Gruppe bestehend aus Boehmiten, hochdispersen Aluminiumoxiden, kolloidalen Siliciumdioxiden, hochdispersen Siliciumdioxiden, Calciumsilicaten, Magnesiumsilicaten, Zeoliten, Kaolin, Bentonit, Siliciumdioxid und Titandioxid.

**8.** Verwendung nach Anspruch 1, worin die anorganischen Füllstoffe auf Calciumcarbonaten oder Bariumcarbonaten basieren.

**9.** Verwendung nach Anspruch 1, worin das hydrolösliche Bindemittel hydrophile Gelatine oder Polyvinylalkohol ist.

**10.** Verwendung nach einem der vorhergehenden Ansprüche, worin das hydrolösliche Bindemittel Polyvinylalkohol ist.

**11.** Verwendung nach einem der vorhergehenden Ansprüche, worin das Tintenstrahlaufzeichnungselement ein poröses Tintenstrahlaufzeichnungselement ist.

**Revendications**

**1.** Utilisation d'au moins un polystyrène sulfonique ou de l'un de ses sels de sulfonate dans un élément d'enregistrement à jet d'encre, ledit élément comprenant un support et au moins une couche de réception d'encre incluant au moins un liant hydrosoluble et des charges inorganiques, pour améliorer la stabilité de l'ozone des colorants d'encre imprimés sur ledit élément.

**2.** Utilisation selon la revendication 1, dans laquelle le sulfonate de polystyrène est choisi parmi le groupe constitué de sulfonate de polystyrène de sodium et de sulfonate de polystyrène de lithium.

**3.** Utilisation selon la revendication 1, dans laquelle la proportion de polystyrène sulfonique ou de sulfonate de polystyrène à l'état sec est comprise entre 0,1 % et 10 % en poids par rapport au poids total de la couche de réception humide.

**4.** Utilisation selon la revendication 3, dans laquelle la proportion de polystyrène sulfonique ou de sulfonate de polystyrène à l'état sec est comprise entre 1 % et 3 % en poids par rapport au poids total de la couche de réception humide.

**5.** Utilisation selon la revendication 1, dans laquelle les charges inorganiques sont à base d'oxyde de métal ou d'hydroxyde de métal.

**6.** Utilisation selon la revendication 5, dans laquelle les charges inorganiques sont à base d'alumine, de silice, de titane, de zirconium, ou de leurs mélanges.

**7.** Utilisation selon la revendication 6, dans laquelle les charges inorganiques sont choisies parmi le groupe constitué des boehmites, de poudre d'alumine ultrafine, de silices colloïdales, de poudre de silice ultrafine, de silicates de calcium, de silicates de magnésium, de zéolites, de kaolin, de bentonite, de dioxyde de silicium et de dioxyde de titane.

**8.** Utilisation selon la revendication 1, dans laquelle les charges inorganiques sont à base de carbonates de calcium ou de carbonates de baryum.

**9.** Utilisation selon la revendication 1, dans laquelle le liant hydrosoluble est une gélatine hydrophile ou un alcool polyvinylique.

**10.** Utilisation selon l'une quelconque des revendications précédentes, dans laquelle le liant hydrosoluble est un alcool polyvinylique.

**11.** Utilisation selon l'une quelconque des revendications précédentes, dans laquelle l'élément d'enregistrement à jet d'encre est un élément d'enregistrement à jet d'encre poreux.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

FIG. 11

FIG. 12

**FIG. 13**

**FIG. 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 976571 A
- EP 1162076 A
- WO 9402325 A
- FR 2259166 A